(19) Europäisches Patentamt European Patent Office Office européen des brevets

(11) **EP 4 198 609 B1**

(12) **EUROPEAN PATENT SPECIFICATION**

(45) Date of publication and mention
of the grant of the patent:
**25.02.2026 Bulletin 2026/09**

(21) Application number: **21865825.0**

(22) Date of filing: **19.08.2021**

(51) International Patent Classification (IPC):
*G02B 27/01* (2006.01)   *G02B 25/00* (2006.01)

(52) Cooperative Patent Classification (CPC):
**G02B 27/0172; G02B 25/001;** G02B 2027/012

(86) International application number:
**PCT/CN2021/113421**

(87) International publication number:
**WO 2022/052769 (17.03.2022 Gazette 2022/11)**

(54) **OPTICAL IMAGING SYSTEM AND HEAD-MOUNTED DISPLAY DEVICE**

OPTISCHES ABBILDUNGSSYSTEM UND KOPFMONTIERTE ANZEIGEVORRICHTUNG

SYSTÈME D'IMAGERIE OPTIQUE ET DISPOSITIF D'AFFICHAGE MONTÉ SUR LA TÊTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2020 CN 202010955672**

(43) Date of publication of application:
**21.06.2023 Bulletin 2023/25**

(73) Proprietor: **Huawei Technologies Co., Ltd.**
**Shenzhen, Guangdong 518129 (CN)**

(72) Inventors:
• **LO, Cheng**
**Shenzhen, Guangdong 518129 (CN)**
• **JIN, Yunfeng**
**Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**EP-B1- 3 092 523**       **CN-A- 110 579 880**
**CN-A- 110 927 976**     **CN-A- 110 927 976**
**CN-U- 205 003 365**     **CN-U- 205 003 365**
**GB-A- 392 021**           **JP-A- 2014 157 307**
**US-A- 5 508 834**         **US-A- 5 742 421**
**US-A- 5 757 443**         **US-A1- 2015 061 975**
**US-A1- 2021 132 397**

## Description

Priority is claimed to Chinese Patent Application No. 202010955672.3, filed with the China National Intellectual Property Administration on September 11, 2020 and entitled "OPTICAL IMAGING SYSTEM AND HEAD-MOUNTED DISPLAY APPARATUS".

## TECHNICAL FIELD

This disclosure generally relates to the field of optical technologies, and the invention in particular relates to head-mounted display apparatus.

## BACKGROUND

Virtual reality (Virtual Reality, VR) refers to projecting digital content to a human eye via an optical imaging system, so that a user seems to be in a virtual world, achieving immersive virtual experience. With continuous development of VR technologies, the user can see pictures in the virtual world by using a head-mounted display apparatus, and the optical imaging system is a key component in the head-mounted display apparatus.

The optical imaging system includes a display and a lens group. Light emitted by the display is refracted by the lens group and then enters a human pupil. Reverse extension lines of the light entering the human pupil converge at a distance to form a virtual image. An image viewed by the human eye is a virtual image, and the virtual image is an enlarged image of an image displayed on the display.

During production and assembly, foreign matters, such as dust, leather scraps, and fiber scraps, may fall between the display and lens group. As a result, when the human eye observes the display via the optical imaging system, the foreign matters will be imaged, causing poor display such as black spots, black lines, bright spots, and bright lines.

EP 3 092 523 B1 relates to a wearable display apparatus in the form of an eyeglass worn by a user. The aim here is display to the user eye images generated by a display panel, i. e. virtual images, and images picked up by a camera from the real world surrounding. For this purpose, the wearable display apparatus includes two display panels arranged in the side temple arms of the eyeglass and two light guides arranged behind each eyeglass window as well as a centrally arranged front camera and side camera. Onn the respective display panel there is a cover and a lens arrangement consisting of a polarisation beam splitter and an aspheric lens which couple the image generated by the respective display panel into the light guide in which the light will be totally internally reflected to an exit surface of the light guide which directs this light to the user eye. Simultaneously, the fron and side cameras can record side forn and side images.

CN 205 003 354 U discloses a head-mounted display apparatus in the form of an eyeglass. It comprises a display panel in front of the eyeglass winwods, a cover on the display panel and a lens for directly coupling light from the display panel through the cover and lens to the eye of a user wearing the eyeglass.

CN 110 927 976 A describes a head-mounted display optical module and equipment designed to improve the visual experience in virtual reality (VR) and augmented reality (AR) systems. The document addresses two primary technical issues found in existing VR and AR display technologies: color cast at large viewing angles and low optical efficiency. The key components of solving this problem include an optical lens assembly, a protective layer with a continuously changing refractive index, and a display panel. Design details of the optical elements like aspheric surfaces on the lenses and mirrors, are used to optimize the image quality and viewing experience.

## SUMMARY

The object of the present invention is to provide a head-mounted display apparatus, so that poor display caused by a foreign matter between a display and a lens group is not easily detected by a human eye. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

One aspect of the invention is an optical imaging system, including a display and a lens group, where the display is located on a side that is of the lens group and that is away from a human eye, the display includes a display panel and a cover plate, the cover plate is disposed on a side that is of the display panel and that faces the lens group, and a thickness of the cover plate meets:

$$h \geq \frac{f'^2 * n}{a + f'},$$

where

f is an equivalent image focal length of the lens group, n is a refractive index of the cover plate, and a is a distance of distinct vision for a human eye.

According to the optical imaging system provided in accordance with the invention, the thickness of the cover plate on the display is increased, so that the thickness of the cover plate is increased to a specific proportion of a focal length of the optical imaging system, thereby increasing a distance between the display panel and a foreign matter falling between the lens group and the display; and when a display image on the display panel is clearly imaged, an image distance of a foreign matter image on the surface of the cover plate is far away from an image distance of the display image, thereby presenting a blurring effect that is unable to be clearly captured by a human eye. Therefore, poor display such as black spots, black lines, bright spots, and bright lines cannot be detected.

In a possible implementation, a is not greater than 300 mm.

A distance of distinct vision is the nearest distance at which a human eye can distinguish an object, with a range of the distance of distinct vision not exceeding 300 mm. When looking at infinity, the human eye cannot distinguish an object within a range of 300 mm. Therefore, when the distance of distinct vision is substituted into the foregoing formulas, imaging of the foreign matter on the surface of the cover plate can present a blurring effect.

In a possible implementation, the cover plate includes a first cover plate covering the display panel and a second cover plate disposed on the first cover plate, and the second cover plate is bonded to the first cover plate.

In a production process of the display, a surface of the display panel is generally covered with a relatively thin protective layer as a first cover plate. To increase a thickness of the cover plate, in addition to directly increasing the thickness of the first cover plate in the production process, a second cover plate may be disposed on the surface of the display. The second cover plate may be disposed on the display in a manner such as bonding. A process is simple and easy to implement, and costs are relatively low.

In a possible implementation, the thickness of the cover plate is less than 3.5 mm.

The thickness of the cover plate ranges from less than 3.5 mm, so as to prevent an excessive thickness of the cover plate from greatly affecting a volume and weight of the optical imaging system while enabling an image distance of imaging of a foreign matter on a surface of the cover plate to be relatively far away from an image distance of a displayed image, thereby meeting an overall light and thin design of the optical imaging system.

In a possible implementation, the cover plate is made of transparent glass or plastic, and the refractive index of the cover plate falls within a range of 1.3 to 1.9.

The cover plate of the display is configured as optical glass or optical plastic, and cover plates of different materials have different refractive indexes and density. When the thickness of the cover plate is designed, a material with a relatively small refractive index is selected as the cover plate, so that the thickness of the cover plate can be as thin as possible to meet an overall light and thin design of the optical imaging system.

According to the invention, the equivalent image focal length of the lens group ranges from 10 mm to 60 mm.

With requirements on a size and imaging quality of the optical imaging system, the focal length of the lens group tends to be in a smaller range. A smaller focal length of the lens group corresponds to a larger magnification, and more obvious poor display caused by the foreign matter between the lens group and the display. Therefore, it is more urgent to resolve the problem by increasing the thickness of the cover.

In a possible implementation, the lens group includes at least one lens, and the lens includes a Fresnel lens, a plano-convex lens, a double convex lens, a positive meniscus lens, a plano-concave lens, a double concave lens, or a negative meniscus lens.

Different lens types and different quantities of lenses may be configured in the lens group of the optical imaging system, and the imaging quality is improved by combining the lenses, to meet more imaging requirements.

The head-mounted display apparatus according to the invention includes a device body, a wearable part, and the foregoing optical imaging system mounted in the device body.

The head-mounted display apparatus includes the device body and the wearable part. When a user wears the head-mounted display apparatus, the device body is located in front of the eyes of the user, and is configured to provide a display picture for the eyes of the user. The wearable part is fixed on a head or an ear of the user, to implement reliable wearing of the head-mounted display apparatus. The optical imaging system is disposed in the device body, and is configured to display a virtual picture.

In a possible implementation, the head-mounted display apparatus includes a pair of virtual reality glasses.

The head-mounted display apparatus may be in a form of glasses. In this case, the device body may include a mirror bracket that is mounted above the bridge of the nose of the user and in front of the eyes of the user, and the wearable part may be a mirror leg mounted on the ear of the user.

Embodiments of this application provide the optical imaging system and the head-mounted display apparatus.

The thickness of the cover plate on the display is increased, so that the thickness of the cover plate is increased to a specific proportion of a focal length of the optical imaging system, thereby increasing a distance between the display panel and a foreign matter falling between the lens group and the display; and when a display image on the display panel is clearly imaged, an image distance of a foreign matter image on the surface of the cover plate is far away from an image distance of the display image, thereby presenting a blurring effect that is unable to be clearly captured by a human eye. Therefore, poor display such as black spots, black lines, bright spots, and bright lines cannot be detected.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

## BRIEF DESCRIPTION OF DRAWINGS

FIG. 1 is a schematic diagram of a structure of a head-mounted display apparatus according to an embodiment of this application;
FIG. 2 is a schematic diagram of a structure of a head-mounted display apparatus from another angle according to an embodiment of this application;
FIG. 3 is a schematic diagram of a structure of an optical imaging system according to a related technology;
FIG. 4 is a schematic diagram of an imaging principle of an optical imaging system according to a related technology;
FIG. 5 is a schematic diagram of imaging of a head-mounted display apparatus according to a related technology;
FIG. 6 is a schematic diagram of an imaging principle of an optical imaging system according to an embodiment of this application;
FIG. 7 is a schematic diagram of an object-image relationship in an optical imaging system according to an embodiment of this application;
FIG. 8 is a schematic diagram of imaging of a head-mounted display apparatus according to an embodiment of this application;
FIG. 9 is a schematic diagram of a structure of an optical imaging system before optimization according to an embodiment of this application;
FIG. 10 is a schematic diagram of a structure of an optical imaging system after optimization provided in FIG. 9;
FIG. 11 is a schematic diagram of a structure of an optical imaging system before optimization according to another embodiment of this application; and
FIG. 12 is a schematic diagram of a structure of the optical imaging system after optimization provided in FIG. 11.

Descriptions of reference numerals:
100: head-mounted display apparatus; 11: device body; 12: wearable part; 200: optical imaging system; 21: display; 211: display panel; 212: cover plate; 212a: first cover plate; 212b: second cover plate; 22: lens group; 221: first lens; 222: second lens; 223: third lens; 224: fourth lens; 225: fifth lens; 300: foreign matter.

## DESCRIPTION OF EMBODIMENTS

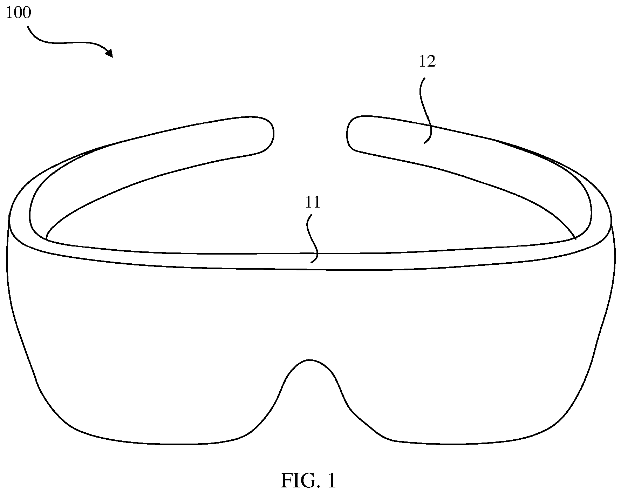

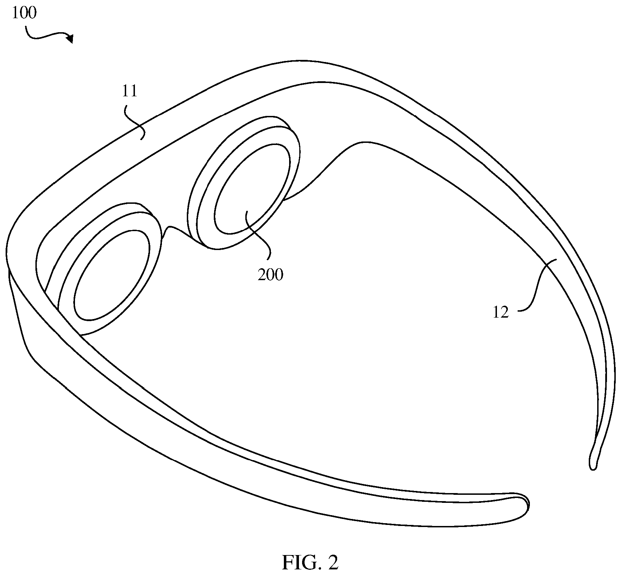

FIG. 1 is a schematic diagram of a structure of a head-mounted display apparatus according to an embodiment of this application. FIG. 2 is a schematic diagram of the structure of the head-mounted display apparatus from another angle according to the embodiment of this application. As shown in FIG. 1 and FIG. 2, the embodiment of this application provides the head-mounted display apparatus 100. The head-mounted display apparatus 100 includes a device body 11 and a wearable part 12. When a user wears the head-mounted display apparatus 100, the device body 11 is located in front of the eyes of the user, to provide a display picture for the eyes of the user. The wearable part 12 is fixed on the head or the ears of the user, to implement reliable wearing of the head-mounted display apparatus 100.

For example, the head-mounted display apparatus 100 may be in a form of a pair of glasses. In this case, the device body 11 may include a mirror frame that is mounted above the bridge of the nose of the user and in front of the eyes of the user, and the wearable part 12 may be a mirror leg mounted on the ears of the user. The head-mounted display apparatus 100 may also be in a form of a helmet or the like. The device body 11 may be an eye mask disposed in front of the eyes of the user, and the wearable part 12 may be a helmet disposed in front of the head of the user.

An optical imaging system 200 is disposed in the device body 11, to display a virtual picture. There may be two optical imaging systems 200, which respectively correspond to the left eye and the right eye of the user. The two optical imaging systems 200 may achieve the purpose of stereoscopic display through interlacing display, picture exchange, or parallax fusion.

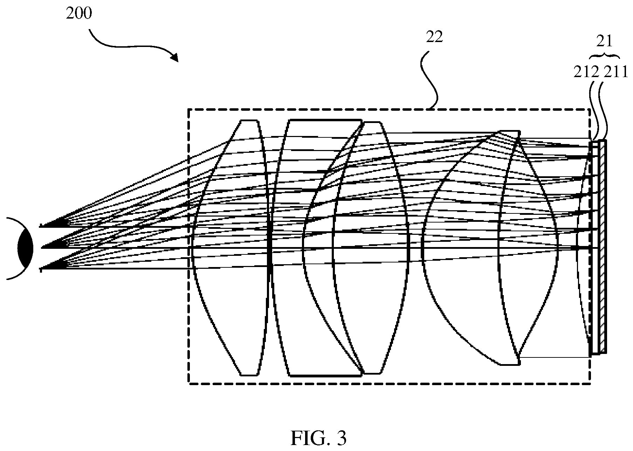

FIG. 3 is a schematic diagram of a structure of an optical imaging system according to a related technology. As shown in FIG. 3, the optical imaging system 200 includes a display 21 and a lens group 22. The display 21 is located on a side that is of the lens group 22 and that is away from a human eye. The display 21 is configured to display a picture. Light emitted by the display 21 enters the human eye after being refracted or reflected by the lens group 22.

The display 21 includes a display panel 211 and a cover plate 212. The display panel 211 includes a laminated structure such as a light emitting layer, an optical adhesive layer, and a polarizer, and as a whole, the display panel 211 is used for display. Actually, the light emitting layer emits light, but because a thickness of the entire display panel 211 is less than 0.2 mm and a thickness of each layer inside thereof is negligible, light may be considered as emitting from the surface of a side that is of the display panel 211 and that faces the lens group 22. The cover plate 212 is disposed on the display panel 211, to protect the display panel 211.

The lens group 22 includes at least one lens. The lens includes but is not limited to a Fresnel lens, a plano-convex lens, a double-convex lens, a positive meniscus lens, a plano-concave lens, a double-concave lens, a negative meniscus lens, and the like. A plurality of lenses are used together, so that light emitted by the display 21 enters a human eye in a state of approximately parallel light after being refracted or reflected by one or the plurality of lenses.

A working principle of the optical imaging system 200 on a head-mounted display apparatus 100 is that a position of the display 21 is fixed, light emitted by the display 21 is imaged by using the lens group 22 to a human eye at a specific image distance position, and the human eye can observe an image at the fixed image distance position.

There is a gap between the display 21 and the lens group 22. The gap is at least 0.2 mm, and is used to prevent a collision between the display 21 and the lens group 22. When the display 21 and the lens group 22 are mounted in the device body 11, a sealing structure such as a sealing ring is configured on a periphery, to prevent dust in an external environment from entering the gap between the display 21 and the lens group 22. However, it is difficult to totally avoid dust that enters the gap between the display 21 and the lens group 22 in an assembly process.

In the related technology, the head-mounted display apparatus 100 may be assembled in a 100-level dust-free workshop. In a static 100-level dust-free workshop, diameters of most particulate matter in air are less than 1 $\mu$m, and may be ignored. However, in an actual production process, after personnel enter the workshop environment, skin or clothes is/are inevitably exposed to the environment. As a result, foreign matters such as skin scraps, fiber scraps, and dust are generated. Diameters of these foreign matters range from 10 $\mu$m to 2000 $\mu$m. A size of the foreign matter is relatively small, and it is difficult for personnel equipped with the head-mounted display apparatus 100 to find and clean the foreign matter. Therefore, after the display 21 and the lens group 22 are assembled, the foreign matter may fall into the gap between the display 21 and the lens group 22, for example, may adhere to a surface of the cover plate 212 on the display 21.

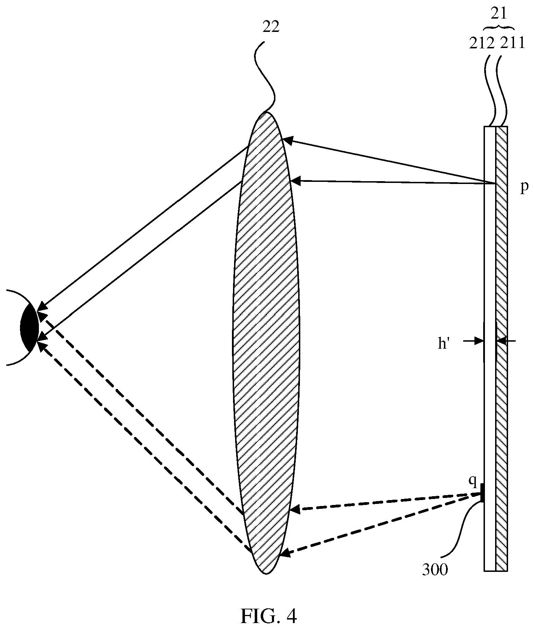

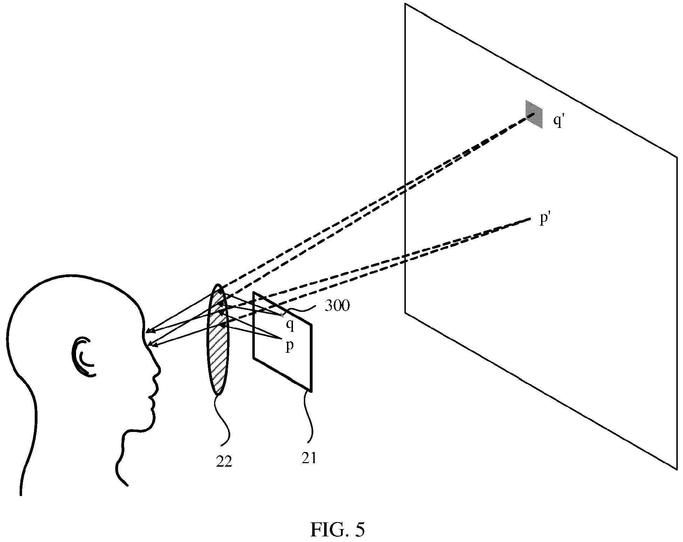

FIG. 4 is a schematic diagram of an imaging principle of the optical imaging system according to the related technology. FIG. 5 is a schematic diagram of imaging of the head-mounted display apparatus according to the related technology. As shown in FIG. 4 and FIG. 5, a foreign matter 300 is adhered to a surface of the side that is of the cover plate 212 and that faces the lens group 22. In this case, there are two types of light entering a human eye through the lens group 22. The first type is light emitted by the display panel 211, for example, at a point p on the display panel 211. The second type is light emitted by the foreign matter 300, for example, at a point q on the foreign matter 300.

After passing through the lens group 22, the light emitted at the point p on the display panel 211 may enter a human eye in a manner close to parallel light, and an image distance of a virtual image p' is within a range from 1 meter to infinity. When the thickness h' of the cover plate 212 is relatively small, the light emitted at the point q on the foreign matter 300 also enters a human eye in a manner close to parallel light after passing through the lens group 22, and an image distance of a virtual image q' is within a range from 1 meter to infinity. Because distances from the point p on the display panel 211 and the point q on the foreign matter 300 to the lens group 22 differ slightly, locations of the virtual images p' and q' are close, and both are within a visible range of the human eye.

In addition, an equivalent focal length of the lens group 22 in the head-mounted display apparatus 100 generally ranges from 10 mm to 100 mm, and a corresponding magnification is between 2.5 times and 25 times. With development of virtual reality technologies, an equivalent focal length of the lens group 22 in a virtual reality apparatus may be reduced to a range of 10 mm to 60 mm. For the foregoing foreign matter 300 with the diameter of 10 $\mu$m to 2000 $\mu$m, after being magnified by the lens group 22, a diameter of a displayed virtual image may reach a size range of a millimeter level or even a centimeter level, and a size of the virtual image can be captured by the eyes of the user.

In other words, when the user wears the head-mounted display apparatus 100, the very small foreign matter 300, such as leather scraps, fiber scraps, and dust adhered to the display 21 in the assembly process, after being magnified and imaged by the optical imaging system 200, causes poor display such as black spots, occur black lines, bright spots, and bright lines, which may affect a display effect of the head-mounted display apparatus 100 and cause poor user experience.

Based on the foregoing descriptions, embodiments of this application provide an optical imaging system and a head-mounted display apparatus. A thickness of a cover plate on a display is increased, so that the thickness of the cover plate is increased to a specific proportion of a focal length of the optical imaging system, thereby increasing a distance between the display panel and a foreign matter falling between a lens group and the display; and when a display image on the display panel is clearly imaged, an image distance of a foreign matter image on the surface of the cover plate is far away from an image distance of the display image, thereby presenting a blurring effect that is unable to be clearly captured by a human eye. Therefore, poor display such as black spots, black lines, bright spots, and bright lines cannot be detected.

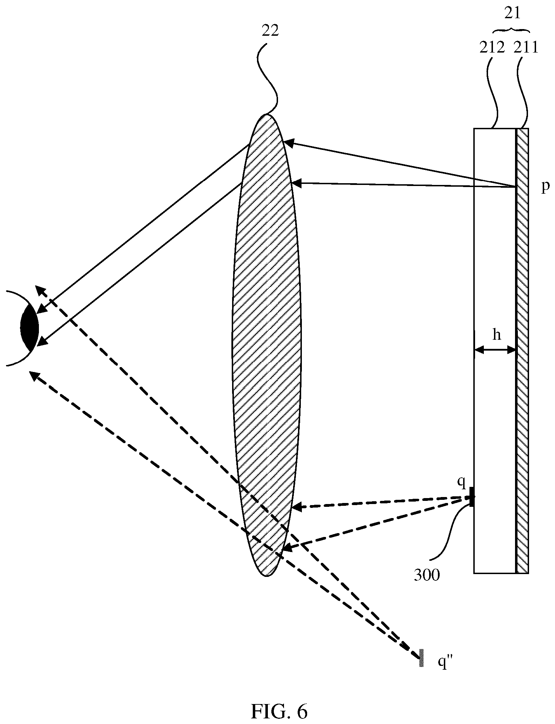

FIG. 6 is a schematic diagram of an imaging principle of an optical imaging system according to the embodiment of this application. As shown in FIG. 6, in this embodiment of this application, the optical imaging system 200 includes a display 21 and a lens group 22. The display 21 is located on a side that is of the lens group 22 and that is away from a human eye. The display 21 includes a display panel 211 and a cover plate 212. The cover plate 212 is connected to a side that is of the display panel 211 and that faces the lens group 22.

A distance between the surface that is of the cover plate 212 and that is away from the display panel 211 and the surface that is of the display panel 211 and that faces the cover plate 212, namely, a thickness h (unit: mm) of the cover plate 212, meets the following formula:

$$h \geq \frac{f'^2 * n}{a + f'} \qquad \text{Formula 1}$$

n is a refractive index of the cover plate 212; f is an equivalent image focal length (unit: mm) of the optical imaging system 200 and f' is a positive value and is equal to an equivalent object focal length, and a represents a distance of distinct vision for a human eye, and is not greater than 300 mm.

In this case, compared with that in FIG. 4, the thickness h of the cover plate 212 in this embodiment of this application is greater than the thickness h' of the cover plate 212 in the related technology, and the distance between the foreign matter 300 on the surface of the cover plate 212 and the display panel 211 increases. When light emitted at the point p on the display panel 211 is clearly imaged, an imaginary image of the point q on the foreign matter 300 is blurred, and is not easily detected by the human eye.

The following is a derivation process of the thickness range of the cover plate 212, namely Formula 1.

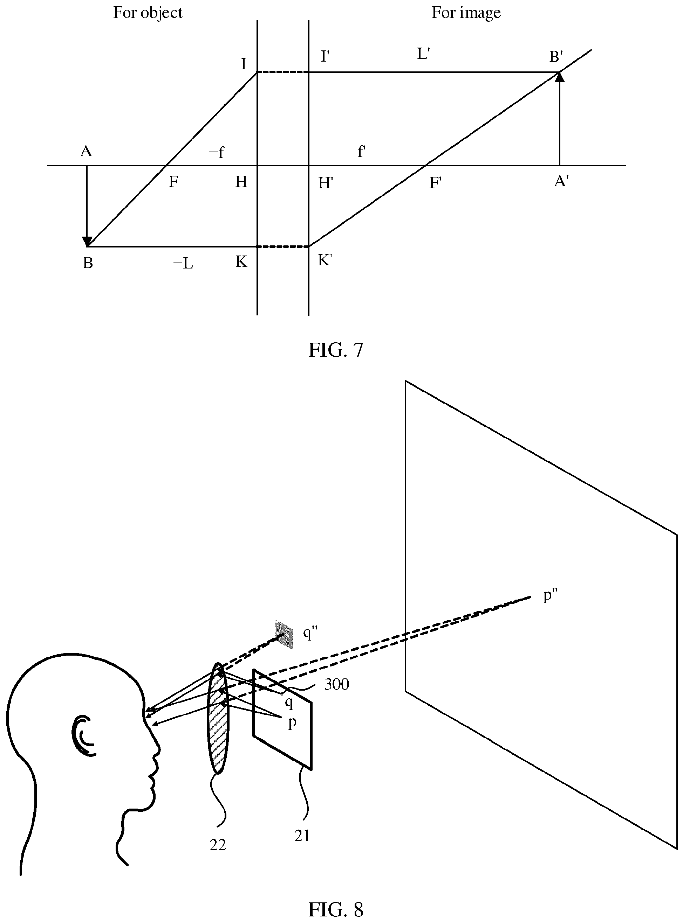

FIG. 7 is a schematic diagram of an object-image relationship in the optical imaging system according to the embodiment of this application. In FIG. 7, HH' indicates a thickness of an equivalent lens of the optical imaging system 200, B is a to-be-imaged object, B' is a virtual image of B after imaging, and F is a focus of the equivalent lens of the optical imaging system 200. As shown in FIG. 7, in the optical imaging system 200 provided with the cover plate 212 with the specific thickness, because the foreign matter 300 on the surface of the cover plate 300 is relatively far away from the surface of the display panel 211, the object-image relationship formula is:

$$\frac{1}{L'} - \frac{1}{L} = \frac{1}{f'} \qquad \text{Formula 2}$$

L' is a distance from the virtual image to the equivalent lens of the optical imaging system 200, and L is a distance from the display panel 211 to the equivalent lens of the optical imaging system 200.

As shown in FIG. 6, when an object surface is on the display panel 211, the point p on the display panel 211 is used as an example, an object distance of the point p is defined as L1, and an image distance is defined as L1'. For the optical imaging system 200 in the head-mounted display apparatus 100, the object distance L1 is less than a distance between the display panel 211 and the lens group 22, which is less than 60 mm. The image distance L1' is a virtual image distance of a display picture observed by the human eye, which is within the range of 1 meter to infinity. Therefore, L1' is far greater than L1, and the foregoing object image formula may be simplified as:

$$\frac{f'}{L1} = -1 \qquad \text{Formula 3}$$

When the object surface is on the cover plate 212, the point q on the foreign matter 300 is used as an example, an object distance of the point q is L2, and an image distance of the point q is L2'. A relationship between L2 and L1 meets the following formula:

$$-L2 = (-L1) - \frac{h}{n} \qquad \text{Formula 4}$$

In this case, an object image formula corresponding to the point q is:

$$\frac{1}{L2'} - \frac{1}{L2} = \frac{1}{f'} \qquad \text{Formula 5}$$

The following formula may be obtained by substituting Formula 3 and Formula 4 into Formula 5:

$$\frac{1}{L2\prime} = \frac{\frac{h}{n}}{-f\prime^{2} + \frac{h}{n}*f\prime} \qquad \text{Formula 6}$$

According to Formula 6, a relationship between h and the virtual image distance L2', the equivalent image focal length f', and the refractive index n of the cover plate 212 may be obtained as follows:

$$h = \frac{f\prime^{2}*n}{-L2\prime + f\prime} \qquad \text{Formula 7}$$

In the optical imaging system 200, a reciprocal of the virtual image distance represents a diopter, and 1/L2' is a reciprocal of the virtual image distance of the point q and represents a diopter of a virtual image of the foreign matter 300 on the surface of the cover plate 212. When the imaging virtual image distance of the display picture observed by the human eye ranges from 1 meter to infinity, if the virtual image diopter of the point q of the foreign matter 300 is greater than the virtual image diopter of the point p on the display panel 211, and the virtual image of the point q of the foreign matter 300 is within the distance of distinct vision for the human, it may be considered that the human eye cannot detect the imaging of the foreign matter 300 of a specific size.

The nearest distance at which a person can clearly see an object is referred to as a distance of distinct vision. The distance a of distinct vision is not greater than 300 mm. For a healthy human eye, the distance of distinct vision is about 250 mm. For nearsighted human eyes, the distance of distinct vision is shorter than 250 mm. For farsighted a human eye, the distance of distinct vision is longer than 250 mm.

Formula 1 may be obtained by substituting a case in which a foreign matter at a distance of distinct vision a cannot be clearly seen by the human eye at the same time when the human eye gazes at infinity into Formula 7.

A maximum value of 300 mm of the distance a of distinct vision is selected and substituted into Formula 1, to obtain Formula 8.

$$h \geq \frac{f\prime^{2}*n}{300 + f\prime} \qquad \text{Formula 8}$$

When the thickness h of the cover plate 212 meets Formula 8, the distance between the virtual image of the point q of the foreign matter 300 and the human eye ranges from 300 mm. In this case, because the imaging virtual image distance of the display picture observed by the human eye ranges from 1 meter to infinity, and the virtual image diopter of the point q of the foreign matter 300 is greater than the virtual image diopter of the point p on the display panel 211, it may be considered that the human eye cannot detect the imaging of the foreign matter 300 of the specific size.

It is not difficult to understand that when the human eye cannot detect a virtual image of a foreign matter 300 mm away, the human eye also cannot detect a virtual image of the foreign matter less than 300 mm away. Therefore, a maximum value of 300 mm of the distance a of distinct vision is substituted into Formula 8 obtained by using Formula 1, h includes a range of h when a is less than 300 mm.

FIG. 8 is a schematic diagram of imaging of the head-mounted display apparatus according to the embodiment of this application. As shown in FIG. 8, after passing through the lens group 22, the light emitted at the point p on the display panel 211 may enter the human eye in a manner close to the parallel light, and an image distance of the virtual image p" is within a range from 1 meter to infinity. When the thickness h of the cover plate 212 meets Formula 8, an image distance of a virtual image q" of the point q of the foreign matter 300 on the surface of the cover plate 212 is within a range less than 300 mm. In this case, the virtual image diopter of the foreign matter 300 is greater than the virtual image diopter of the display picture of the display panel 211, and the size of the virtual image of the foreign matter 300 is relatively small, and it may be considered that the virtual image cannot be detected by the human eye.

It should be noted that the cover plate 212 may be a protective layer attached to the surface of the display panel 211 in a production process of the display 200. In this case, the thickness of the cover plate 212 may meet Formula 8, to blur the imaging of the foreign matter on the display 200. In another possible implementation, after the display 200 is manufactured, a thickness of a first cover plate of the display 200 cannot meet Formula 8. An additional layer of plate material may be added to the display 200 as a second cover plate, so that a sum of thicknesses of the second cover plate and the first cover plate meets Formula 8, to blur the imaging of the foreign matter on the display 200.

Materials of the cover plate 212 include but are not limited to transparent materials such as glass or plastic, and a refractive index of the cover plate may range from 1.3 to 1.9. The first cover plate covers the surface of the display panel 211 and may be a film layer formed through deposition or the like during manufacturing of the display panel 211, or may be connected to the display panel 211 with optical adhesive. When the second cover plate is additionally added, the second cover plate may also be bonded to the first cover plate with optical adhesive, so as not to affect display effect of the display panel 211. Alternatively, the display panel 211 is provided with a display area and a non-display area located around the display area. The second cover plate and the first cover plate may be bonded with glue or gum. The glue or gum may be configured in an area corresponding to the non-display area, to avoid affecting normal display in the display area. Alternatively, a mechanical part may be configured around the display and the second cover plate, so that the second cover plate is configured in close contact with the first cover plate. The first cover plate and the second cover plate may be either made of the same material, or may be made of different materials. Generally, because refractive indexes of the first cover plate and the second cover plate are similar, and a thickness of the first cover plate is far less than that of the second cover plate, when the thickness of the second cover plate that needs to be newly added is calculated by using the foregoing formula, a refractive index difference between the first cover plate and the second cover plate may be ignored, and the refractive index of the second cover plate is substituted into the formula for calculation.

In addition, in this embodiment of this application, the thickness of the cover plate 212 may be less than 3.5 mm, to prevent an excessively large thickness of the cover plate 212 from greatly affecting a volume and weight of the optical imaging system.

According to the optical imaging system provided in this embodiment of this application, the distance between the foreign matter on the surface of the display and the display panel can be increased while the thickness of the cover plate in the display is added, so that the diopter of the virtual image of the foreign matter is greater than a diopter represented by a distance of distinct vision for the human eye. Therefore, the position of the virtual image of the foreign matter is far away from that of the virtual image of the display picture, and it is ensured that when the human eye observes the display with the optical imaging system, the poor display caused by foreign matter cannot be clearly captured by the human eye.

The following describes the optical imaging system and the head-mounted display apparatus provided in embodiments of this application with reference to more specific embodiments.

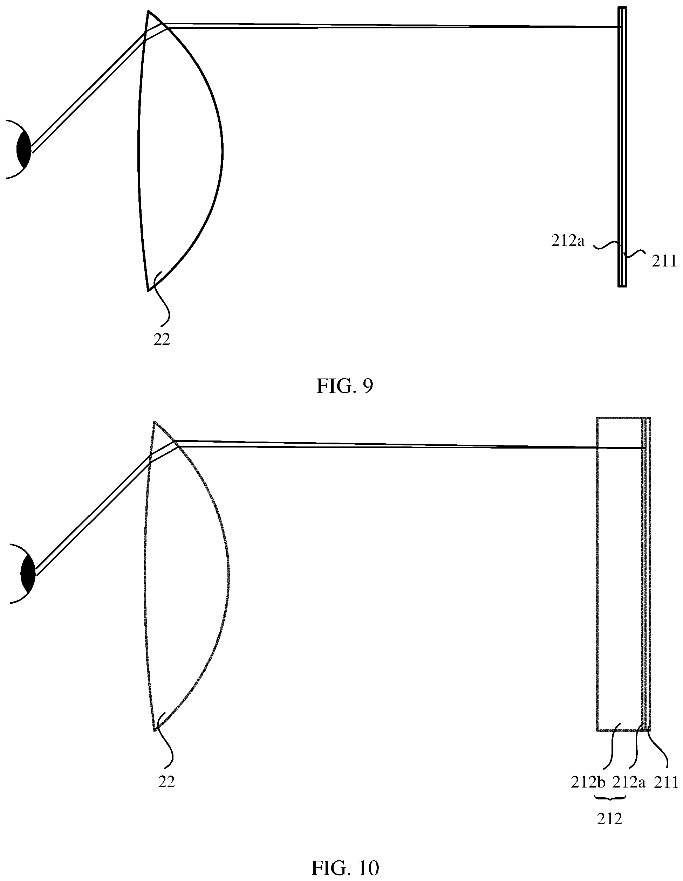

FIG. 9 is a schematic diagram of a structure of an optical imaging system before optimization according to an embodiment of this application. As shown in FIG. 9, the optical imaging system 200 includes the display 21 and the lens group 22. The display 21 may be a liquid crystal display (Liquid Crystal Display, LCD). The lens group 22 may include one lens. The lens may be a Fresnel lens. Surfaces on two sides of the lens are respectively an S1 surface and an S2 surface. The S2 surface is located on a side facing the display 21, and the S1 surface is located on a side facing the human eye and backing to the display 21. An equivalent focal length f of the lens group 22 under illumination of 530 nm is 24.67 mm. The thickness of a first cover plate 212a of the display 21 is relatively thin, and parameters of the optical imaging system 200 are shown in Table 1.

**Table 1**

|  | Curvature radius (mm) | Thickness (mm) | Material |
|---|---|---|---|
| Image plane | Infinity | -1500 | Air |
| Pupil | Infinity | 15 | Air |
| Lens S1 | 88.75 | 5 | PMMA |
| Lens S2 | -13.83 | 23.5 | Air |
| Cover plate | Infinity | 0.2 | H-K9L |

For the parameters in Table 1, it should be noted that when content in the column "Material" is air, the value in the column "Thickness" actually represents a distance, and a center of each structure is configured as a standard for each parameter. For example, the curvature radius and thickness of the lens S1 indicate the curvature radius and thickness corresponding to the center of the lens S1. It can be learned from Table 1 that for the first cover plate 212a of the display 21, the thickness is 0.2 mm; the material is H-K9L glass and the corresponding refractive index n=1.52. The distance between the center of the surface S2 of the lens and the surface of the first cover plate 212a is 23.5 mm. The thickness of the center of the lens is 5 mm, and the lens is made of polymethyl methacrylate PMMA. The image distance of a display picture of the optical imaging system 200 is 1500 mm, and the corresponding diopter is 0.67D.

In this case, it may be obtained through computer simulation that the virtual image distance of the foreign matter in the surface center of the first cover plate 212a is 1130 mm, and the corresponding diopter is 0.88D. It can be learned that the virtual image of the display picture is close to the virtual image of the foreign matter on the surface of the cover plate 212a, and the virtual image of the foreign matter is easily captured by a human eye. This affects viewing effect of the display picture.

FIG. 10 is a schematic diagram of a structure of the optical imaging system after optimization provided in FIG. 9. As shown in FIG. 10, in this embodiment of this application, a second cover plate 212b is newly added to the display 21 to address this problem. A material and a refractive index of the newly added second cover plate 212b are the same as those of the first cover plate 212a. f=24.67 and n=1.52 are substituted into Formula 1. It can be obtained that the thickness h of the cover plate 212 is greater than or equal to 2.85 mm, and the thickness of the newly added second cover plate 212b is greater than or equal to 2.65 mm. In this case, parameters of the optical imaging system 200 are shown in Table 2.

**Table 2**

|  | Curvature radius (mm) | Thickness (mm) | Material |
|---|---|---|---|
| Image plane | Infinity | -1500 | Air |
| Pupil | Infinity | 15 | Air |
| Lens S1 | 88.75 | 5 | PMMA |
| Lens S2 | -13.83 | 21.8 | Air |
| Cover plate | Infinity | 2.85 | H-K9L |

In this case, it may be obtained through computer simulation that the virtual image distance of the foreign matter in the center of the surface of the cover plate 212 is 257 mm, and the corresponding diopter is 3.89D. It can be learned that, after the second cover plate 212b is newly added, a virtual image caused by the foreign matter attached to the cover plate 212 needs to be adjusted about the diopter of 3.89D by the human eye to complete refocusing, so that the virtual image is not easily found.

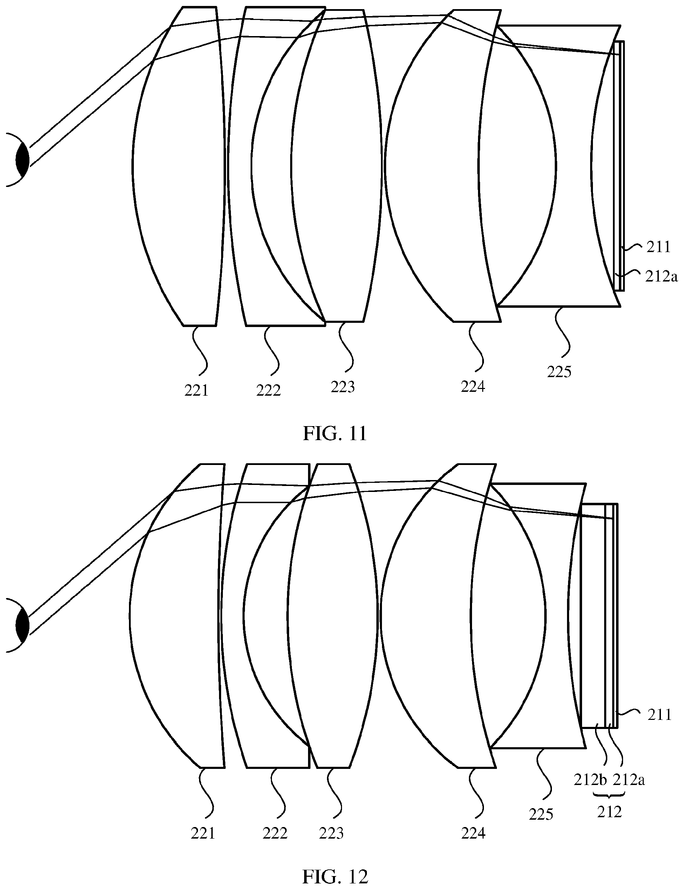

FIG. 11 is a schematic diagram of a structure of an optical imaging system before optimization according to another embodiment of this application. As shown in FIG. 11, the optical imaging system 200 includes the display 21 and the lens group 22. The display 21 may be an organic light emitting diode (Organic Light Emitting Diode, OLED). The lens group 22 may include a first lens 221, a second lens 222, a third lens 223, a fourth lens 224, and a fifth lens 225 that are sequentially configured. The fifth lens 225 is closest to the display 21. Each lens includes a surface S1 and a surface S2, the surface S2 is located on a side facing the display 21, and the surface S1 is located on a side facing the human eye and backing the display 21. An equivalent focal length f of the lens group 22 is 21.56 mm under illumination of 530 nm. The thickness of the first cover plate 212a of the display 21 is relatively thin, and parameters of the optical imaging system 200 are shown in Table 3.

**Table 3**

|  | Curvature radius (mm) | Thickness (mm) | Material |
|---|---|---|---|
| Image plane | Infinity | Infinity | Air |
| Pupil | Infinity | 12 | Air |
| First lens S1 | 17.08 | 5.94 | APL |
| First lens S2 | -87.45 | 0.2 | Air |
| Second lens S1 | 43.9 | 1.5 | OKP |
| Second lens S2 | 12.48 | 2.57 | Air |
| Third lens S1 | 23.06 | 5.82 | APL |
| Third lens S2 | -40.87 | 0.2 | Air |
| Fourth lens S1 | 13.10 | 6 | E48R |
| Fourth lens S2 | 34.26 | 5 | Air |
| Fifth lens S1 | -12.12 | 2.26 | OKP |
| Fifth lens S2 | 21.8 | 1.46 | Air |
| Cover plate | Infinity | 0.7 | H-K9L |

For the data in Table 3, it should be noted that when content corresponding to the column "Material" is air, the value in the column "Thickness" actually represents a distance, and the center of each structure is configured as a standard for each parameter. For example, the curvature radius and thickness of the first lens S1 indicate the curvature radius and thickness corresponding to the center of the lens S1. According to Table 3, for the first cover plate 212a of the display 21, the thickness is 0.7 mm; the material is H-K9L glass and the corresponding refractive index n=1.52. The distance between the surface S2 of the fifth lens 225 and the surface of the first cover plate 212a is 1.46 mm. Materials APL, OKP, and E48R of the lens are optical plastics of different models. The image distance of displayed picture of the optical imaging system 200 is infinity, and the corresponding diopter is 0.

In this case, it may be obtained through computer simulation that the virtual image distance of the foreign matter in the surface center of the first cover plate 212a is 972 mm, and the corresponding diopter is 1.03D. It can be learned that the virtual image of the display picture is close to the virtual image of the foreign matter on the surface of the first cover plate 212a, and the virtual image of the foreign matter is easily captured by a human eye. This affects viewing effect of the display picture.

FIG. 12 is a schematic diagram of a structure of the optical imaging system after optimization provided in FIG. 11. As shown in FIG. 12, in this embodiment of this application, the second cover plate 212b is newly added to the display 21 to address this problem. The material and refractive index of the newly added second cover plate 212b are the same as those of the first cover plate 212a. f=21.56 and n=1.52 are substituted into Formula 1. It can be obtained that the thickness h of the cover plate 212 is greater than or equal to 2.17 mm, and the thickness of the newly added second cover plate 212b is greater than or equal to 1.97 mm. In this case, parameters of the optical imaging system 200 are shown in Table 4.

**Table 4**

|  | Curvature radius (mm) | Thickness (mm) | Material |
| --- | --- | --- | --- |
| Image plane | Infinity | Infinity | Air |
| Pupil | Infinity | 12 | Air |
| First lens S1 | 13.72 | 5.92 | APL |
| First lens S2 | 126.73 | 0.2 | Air |
| Second lens S1 | 31.97 | 1.5 | OKP |
| Second lens S2 | 11.15 | 2.93 | Air |
| Third lens S1 | 27.83 | 6 | APL |
| Third lens S2 | -29.14 | 0.2 | Air |
| Fourth lens S1 | 12.98 | 6 | E48R |
| Fourth lens S2 | 32.77 | 5 | Air |
| Fifth lens S1 | -12.76 | 1.5 | OKP |
| Fifth lens S2 | 34.74 | 0.85 | Air |
| Cover plate | Infinity | 2.17 | H-K9L |

In this case, it may be obtained through computer simulation that the virtual image distance of the foreign matter in the center of the surface of the cover plate 212 is 298 mm, and the corresponding diopter is 3.36D. It can be learned that, after the second cover plate 212b is newly added, a virtual image caused by the foreign matter attached to the cover plate 212 needs to be adjusted about the diopter of 3.36D by the human eye to complete refocusing, so that the virtual image is not easily found.

In embodiments of this application, it should be noted that, unless otherwise specified and limited, the terms "mount", "link", and "connect" should be understood in a broad sense. For example, it may be a fixed connection, or may be an indirect connection through an intermediate medium, or may be an interconnection between two elements or an interaction relationship between two elements. For persons of ordinary skill in the art, specific meanings of the foregoing terms in embodiments of this application may be understood based on a specific situation. In the specification, claims, and the foregoing mentioned drawings of embodiments of this application, terms such as "first", "second", and "third" are intended to distinguish between similar objects but do not necessarily indicate a specific order or sequence.

In addition, terms such as "include", "have/has", and any variations thereof are intended to cover non-exclusive inclusions, for example, a process, method, system, product, or device that includes a series of steps or units, which are not necessarily limited to those clearly listed steps or units, but may include other steps or units that are not clearly listed or inherent to such a process, method, product, or device.

Finally, it should be noted that the foregoing embodiments are merely intended for describing the technical solutions of embodiments of this application other than limiting this application. Although embodiments of this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A head-mounted display apparatus (100), comprising a device body (11), a wearable part (12), and an optical imaging system (200) that is mounted inside the device body (11), the optical imaging system (200) comprising:

   a display (21, 200) and a lens group (22), wherein
   the display (21, 200) is located on a side that is of the lens group (22) and that is away from a human eye;
   the display (21, 200) comprises a display panel (211) and a cover plate (212, 212a, 300);
   the cover plate (212, 212a, 300) is disposed on a side of the display panel (211) that faces the lens group (22), and the cover plate (212, 212a, 300) is disposed on the display panel (211); wherein
   the optical imaging system (200) is mounted inside the device body (11) such that, when the head-mounted display apparatus (100) is worn by a user, light emitted from the optical imaging system (200) directly enters the human eye and
   wherein a thickness h of the cover plate (212, 212a, 300) meets:

$$h \geq \frac{f'^2 * n}{a + f'},$$

   wherein
   f' is an equivalent image focal length of the lens group (22), n is a refractive index of the cover plate (212, 212a, 300), and a is a distance of distinct vision for a human eye and wherein the equivalent image focal length of the lens group (22) ranges from 10 mm to 60 mm.

2. The head-mounted display apparatus (100) according to claim 1, wherein a is not greater than 300 mm.

3. The head-mounted display apparatus (100) according to any one of claims 1 to 2, wherein the cover plate (212, 212a, 300) comprises a first cover plate (212a) covering the display panel (211) and a second cover plate (212b) disposed on the first cover plate (212a), and the second cover plate (212b) is bonded to the first cover plate (212a).

4. The head-mounted display apparatus (100) according to any one of claims 1 to 3, wherein the thickness of the cover plate (212, 212a, 300) is less than 3.5 mm.

5. The head-mounted display apparatus (100) according to any one of claims 1 to 4, wherein the cover plate (212, 212a, 300) is made of transparent glass or plastic, and the refractive index of the cover plate (212, 212a, 300) ranges from 1.3 to 1.9.

6. The head-mounted display apparatus (100) according to any one of claims 1 to 5, wherein the lens group (22) comprises at least one lens (221-225), and the lens (221-225) comprises a Fresnel lens, a plano-convex lens, a double convex lens (221-225), a positive meniscus lens, a plano-concave lens, a double concave lens (221-225), or a negative meniscus lens.

7. The head-mounted display apparatus (100) according to claim 1, wherein the head-mounted display apparatus (100) comprises a pair of virtual reality glasses.

**Patentansprüche**

1. Kopfmontierte Anzeigeeinrichtung (100), umfassend einen Vorrichtungskörper (11), ein tragbares Teil (12) und ein optisches Abbildungssystem (200), das in dem Vorrichtungskörper (11) montiert ist, wobei das optische Abbildungssystem (200) Folgendes umfasst:

   eine Anzeige (21, 200) und eine Linsengruppe (22), wobei sich die Anzeige (21, 200) auf einer Seite befindet, die zu der Linsengruppe (22) gehört und die von einem menschlichen Auge entfernt liegt;
   die Anzeige (21, 200) ein Anzeigefeld (211) und eine Abdeckplatte (212, 212a, 300) umfasst;
   die Abdeckplatte (212, 212a, 300) auf einer Seite des Anzeigefelds (211) angeordnet ist, die der Linsengruppe (22) zugewandt ist, und
   die Abdeckplatte (212, 212a, 300) auf dem Anzeigefeld (211) angeordnet ist; wobei

das optische Abbildungssystem (200) in dem Vorrichtungskörper (11) so montiert ist, dass, wenn die kopfmontierte Anzeigevorrichtung (100) von einem Benutzer getragen wird, von dem optischen Abbildungssystem (200) emittiertes Licht direkt in das menschliche Auge gelangt, und

wobei eine Dicke h der Abdeckplatte (212, 212a, 300) Folgendes erfüllt: $h \geq \frac{f'^2 * n}{a + f'}$, wobei

f' eine äquivalente Bildbrennweite der Linsengruppe (22) ist, n ein Brechungsindex der Abdeckplatte (212, 212a, 300) ist und a eine Sehweite für ein menschliches Auge ist, wobei die äquivalente Bildbrennweite der Linsengruppe (22) im Bereich von 10 mm bis 60 mm liegt.

2. Kopfmontierte Anzeigeeinrichtung (100) nach Anspruch 1, wobei a nicht größer als 300 mm ist.

3. Kopfmontierte Anzeigeeinrichtung (100) nach einem der Ansprüche 1 bis 2, wobei die Abdeckplatte (212, 212a, 300) eine erste Abdeckplatte (212a), die das Anzeigefeld (211) abdeckt, und eine zweite Abdeckplatte (212b), die auf der ersten Abdeckplatte (212a) angeordnet ist, umfasst und die zweite Abdeckplatte (212b) mit der ersten Abdeckplatte (212a) verbunden ist.

4. Kopfmontierte Anzeigeeinrichtung (100) nach einem der Ansprüche 1 bis 3, wobei die Dicke der Abdeckplatte (212, 212a, 300) weniger als 3,5 mm beträgt.

5. Kopfmontierte Anzeigeeinrichtung (100) nach einem der Ansprüche 1 bis 4, wobei die Abdeckplatte (212, 212a, 300) aus transparentem Glas oder Kunststoff hergestellt ist und der Brechungsindex der Abdeckplatte (212, 212a, 300) im Bereich von 1,3 bis 1,9 liegt.

6. Kopfmontierte Anzeigeeinrichtung (100) nach einem der Ansprüche 1 bis 5, wobei die Linsengruppe (22) mindestens eine Linse (221-225) umfasst und die Linse (221-225) eine Fresnellinse, eine plankonvexe Linse, eine doppelkonvexe Linse (221-225), eine positive Meniskuslinse, eine plankonkave Linse, eine doppelkonkave Linse (221-225) oder eine negative Meniskuslinse umfasst.

7. Kopfmontierte Anzeigeeinrichtung (100) nach Anspruch 1, wobei die kopfmontierte Anzeigevorrichtung (100) eine Virtual-Reality-Brille umfasst.

**Revendications**

1. Appareil d'affichage monté sur la tête (100), comprenant un corps de dispositif (11), une partie portable (12) et un système d'imagerie optique (200) monté à l'intérieur du corps de dispositif (11), le système d'imagerie optique (200) comprenant :

un écran (21, 200) et un groupe de lentilles (22), dans lequel l'écran (21, 200) est situé sur un côté qui est du groupe de lentilles (22) et qui est éloigné de l'œil humain ;
l'écran (21, 200) comprend un panneau d'affichage (211) et une plaque de recouvrement (212, 212a, 300) ;
la plaque de recouvrement (212, 212a, 300) est disposée sur un côté du panneau d'affichage (211) qui fait face au groupe de lentilles (22), et
la plaque de recouvrement (212, 212a, 300) est disposée sur le panneau d'affichage (211) ; dans lequel
le système d'imagerie optique (200) est monté à l'intérieur du corps de dispositif (11) de sorte que, lorsque l'appareil d'affichage monté sur la tête (100) est porté par un utilisateur,
la lumière émise par le système d'imagerie optique (200) pénètre directement dans l'œil humain et

dans lequel une épaisseur h de la plaque de recouvrement (212, 212a, 300) répond à : $h \geq \frac{f'^2 * n}{a + f'}$, où

f' est une distance focale d'image équivalente du groupe de lentilles (22), n est un indice de réfraction de la plaque de recouvrement (212, 212a, 300), et a est une distance de vision distincte pour un œil humain et dans lequel la distance focale d'image équivalente du groupe de lentilles (22) varie de 10 mm à 60 mm.

2. Appareil d'affichage monté sur la tête (100) selon la revendication 1, dans lequel a n'est pas supérieur à 300 mm.

3. Appareil d'affichage monté sur la tête (100) selon l'une quelconque des revendications 1 à 2, dans lequel la plaque de recouvrement (212, 212a, 300) comprend une première plaque de recouvrement (212a) recouvrant le panneau d'affichage (211) et une seconde plaque de recouvrement (212b) disposée sur la première plaque de recouvrement (212a), et la seconde plaque de recouvrement (212b) est collée à la première plaque de recouvrement (212a).

4. Appareil d'affichage monté sur la tête (100) selon l'une quelconque des revendications 1 à 3, dans lequel l'épaisseur de la plaque de recouvrement (212, 212a, 300) est inférieure à 3,5 mm.

5. Appareil d'affichage monté sur la tête (100) selon l'une quelconque des revendications 1 à 4, dans lequel la plaque de recouvrement (212, 212a, 300) est en verre transparent ou en plastique, et l'indice de réfraction de la plaque de recouvrement (212, 212a, 300) est compris entre 1,3 et 1,9.

6. Appareil d'affichage monté sur la tête (100) selon l'une quelconque des revendications 1 à 5, dans lequel le groupe de lentilles (22) comprend au moins une lentille (221-225), et la lentille (221-225) comprend une lentille de Fresnel, une lentille plano-convexe, une lentille double convexe (221-225), une lentille ménisque positive, une lentille plano-concave, une lentille double concave (221-225) ou une lentille ménisque négative.

7. Appareil d'affichage monté sur la tête (100) selon la revendication 1, dans lequel l'appareil d'affichage monté sur la tête (100) comprend une paire de lunettes de réalité virtuelle.

FIG. 1

FIG. 2

FIG. 3

FIG. 4

FIG. 5

FIG. 6

**FIG. 7**

**FIG. 8**

212a

211

22

FIG. 9

212b 212a 211

212

22

FIG. 10

FIG. 11

FIG. 12

**EP 4 198 609 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010955672
- EP 3092523 B1
- CN 205003354 U
- CN 110927976 A